# EUROPÄISCHE PATENTSCHRIFT

(11) **EP 3 609 673 B1**
(45) Veröffentlichungstag und Bekanntmachung des Hinweises auf die Patenterteilung: **30.08.2023**
(21) Anmeldenummer: 18720961.4
(22) Anmeldetag: 10.04.2018
(51) Int. Cl.: B29C 49/64, B05B 13/02, B29C 49/42, B29C 49/06

(54) **FLUIDKANAL, VERFAHREN ZUR DESSEN HERSTELLUNG, UND BEHÄLTERBEHANDLUNGSANLAGE**
FLUID CHANNEL, METHOD FOR THE PRODUCTION THEREOF, AND CONTAINER-PROCESSING SYSTEM
CANAL DE FLUIDE, PROCÉDÉ DE FABRICATION DE CE DERNIER ET INSTALLATION DE TRAITEMENT DE CONTENANTS

(30) Priorität: 11.04.2017 DE 102017206159
(43) Veröffentlichungstag der Anmeldung: 19.02.2020
(73) Patentinhaber: Krones AG, 93073 Neutraubling (DE)
(72) Erfinder: HEILMEIER, Robert, 93073 Neutraubling (DE); GLAMSCH, Markus, 93073 Neutraubling (DE); JEHL, Thomas, 93073 Neutraubling (DE)
(74) Vertreter: Grünecker Patent- und Rechtsanwälte PartG mbB
(86) Internationale Anmeldenummer: PCT/EP2018/000180
(87) Internationale Veröffentlichungsnummer: WO 2018/188788

(56) Entgegenhaltungen:
- EP-A1- 2 987 605
- EP-A2- 2 000 285
- WO-A1-2017/125201
- US-A1- 2014 084 583
- US-A1- 2015 315 773
- US-A1- 2016 288 401

## Beschreibung

Die vorliegende Erfindung betrifft einen Fluidkanal einer Behälterbehandlungsanlage gemäß dem Oberbegriff des Anspruchs 1 sowie ein Verfahren zum Herstellen eines Bauteils eines solchen Fluidkanals gemäß Anspruch 9 und eine Behälterbehandlungsanlage mit einem Fluidkanal gemäß Anspruch 12.

### Stand der Technik

Aus dem Stand der Technik sind Fluidkanäle auch im Zusammenhang mit Behälterbehandlungsanlagen bekannt. Diese Fluidkanäle werden üblicherweise dazu eingesetzt, die aus den Vorformlingen hergestellten Behälter nach Verlassen der Blasformmaschinen abzukühlen. Insbesondere hat es sich als zweckmäßig erwiesen, den Bodenbereich der Behälter zu kühlen, um eine Verformung des Behälters bei den weiteren Prozessschritten, wie beispielsweise dem Etikettieren, zu vermeiden und so den Ausschuss zu reduzieren.

So offenbart beispielsweise die DE 29 716 644 U1 eine Vorrichtung zur Flüssigkeitsbeaufschlagung von Gefäßen mittels einem Spritzrohr, das mehrere Austrittsöffnungen aufweist, durch die eine Flüssigkeit gespeist wird.

Auch die EP 2000285 B1 offenbart eine kanalförmige Vorrichtung, die zum Kühlen und Trocknen von Behältern verwendet werden kann, wobei zu diesem Zweck ein Fluid in diese Vorrichtung geführt wird, und zum Beaufschlagen der Behälter mit dem Fluid eine entsprechende Öffnung in dem Kanal vorgesehen ist. Die in EP2000285A2 offenbarte Vorrichtung entspricht dem Oberbegriff des Anspruchs 1.

Weiterhin offenbart die WO2017/125201 A1 eine Vorrichtung zum Führen und Verschwenken von Körpern, wie Dosen, Flaschen, Preforms, Flaschenverschlüssen, Behältern aus Karton oder Kolben, wobei das Führen und Verschwenken der Körper durch Gleiten der Körper an der Vorrichtung erfolgt, wobei die Vorrichtung mithilfe eines generativen Fertigungsverfahrens hergestellt wurde.

Ferner offenbart die EP 2 987 605 A1 ein Transportsystem zum Transport von Kunststoffbehältern in einer Behälterbehandlungsanlage, mit wenigstens einer zum Transport eines Kunststoffbehälters in Förderrichtung verfahrbaren Behälteraufnahme, wobei die Behälteraufnahme wenigstens einen an die Behälterform angepassten Saugnapf zum Angriff und Halten des Kunststoffbehälters aufweist.

Die EP 2 000 285 A2 zeigt ferner eine Vorrichtung zum Herstellen von Kunststoffhohlkörpern mittels Streckblasen, aufweisend einen Transporteur, der die Flaschen nach dem Blasen mit der Mündung nach oben zu einem Füller transportiert, wobei der Transporteur dazu ausgebildet ist, den Bodenbereich des Kunststoffhohlkörpers zu kühlen und wobei sich im Bereich des Transporteurs unterhalb des Bodens der Behälter mindestens ein Rohr befindet, das das Kühlfluid führt, wobei das Rohr mit Bohrungen zur Fluidabgabe versehen ist.

Die US 2015/0315773 A1 und die US 2014/0084583 A1 zeigen weiterhin Rohrleitungen und entsprechende Verbinder.

Fluidkanäle werden zumeist aus Metallplatten gefertigt, wobei beispielsweise die Öffnungen für das Austreten des Mediums in die Platten gestanzt werden.

Die bisherigen Fluidkanäle sind daher zum einen vergleichsweise kostspielig, da beispielsweise Metalle eingesetzt werden müssen, und zum anderen aufwendig in der Konstruktion. Insbesondere ist es schwierig und daher kostspielig, die verwendeten Materialien derart zu bearbeiten, dass sie zum einen das Ausstanzen unbeschadet überstehen, und zum anderen auch in einem gebogenen Fluidkanal verwendet werden können, der beispielsweise entsprechend der Transportstrecke der Behälter ausgebildet ist.

### Aufgabe

Ausgehend vom bekannten Stand der Technik besteht die zu lösende technische Aufgabe somit darin, bekannte Fluidkanäle zu reduzierten Kosten, aber mit gleichbleibender oder sogar verbesserter Kühlleistung zu produzieren.

### Lösung

Diese Aufgabe wird erfindungsgemäß durch den Fluidkanal gemäß dem unabhängigen Anspruch 1 und das Verfahren zum Herstellen eines solchen Fluidkanals gemäß Anspruch 9, sowie die Behälterbehandlungsanlage mit einem entsprechenden Fluidkanal gemäß Anspruch 12 gelöst. Vorteilhafte Weiterbildungen der Erfindung sind in den Unteransprüchen erfasst.

Der erfindungsgemäße Fluidkanal einer Behälterbehandlungsanlage zum Behandeln von Behältern, wie Flaschen, wobei die Behälterbehandlungsanlage eine Blasformmaschine und eine der Blasformmaschine in Prozessrichtung nachgeordnete Behälterbehandlungsmaschine umfasst, ist in Prozessrichtung nach der Blasformmaschine und vor der nachgeordneten Behälterbehandlungsmaschine angeordnet, und umfasst zumindest ein Bauteil, durch das das Fluid strömen kann und das wenigstens eine Austrittsöffnung umfasst, durch die das Fluid in Richtung eines Bodens eines in Prozessrichtung transportierten Behälters aus dem Fluidkanal austreten kann. Der Fluidkanal ist dadurch gekennzeichnet, dass das Bauteil ein mit einem generativen Herstellungsverfahren hergestelltes Bauteil ist.

Die Prozessrichtung ist dabei diejenige Richtung, entlang der die Behälter während ihres Transports von der Behälterbehandlungsanlage zur nachgeordneten Behälterbehandlungsmaschine transportiert werden. Diese Richtung kann auch im Wesentlichen durch eine entsprechende Transporteinrichtung, wie eine Neckhandling-Vorrichtung, einzelne Läufer oder Transportbänder definiert werden. Diese Richtung muss nicht geradlinig sein, sondern kann auch in Schlängellinien oder anderen Formen verlaufen. Insbesondere kann der Fluidkanal parallel oder im Wesentlichen parallel, aber vertikal versetzt zur Transporteinrichtung für die Behälter verlaufen.

Die Austrittsöffnungen, die so angeordnet sind, dass das Fluid in Richtung eines Bodens eines in Prozessrichtung transportierten Behälters aus dem Fluidkanal austreten kann, sind als solche Austrittsöffnungen zu verstehen, durch die das Fluid im Wesentlichen entgegengesetzt zur Richtung der Schwerkraft ausströmen kann. Es versteht sich, dass diese Funktion auch dann vorhanden ist, wenn gerade kein Behälter in Transportrichtung transportiert wird.

Unter dem Begriff "Fluid" sollen zunächst sämtliche, nicht im festen Aggregatzustand befindliche Stoffe verstanden werden. Insbesondere fallen hierunter Gase oder Gasgemische, wie beispielsweise Luft, aber auch Flüssigkeiten, wie Wasser.

Sofern nichts Spezifischeres formuliert ist, soll unter dem generativen Herstellungsverfahren jedes Verfahren verstanden werden, bei dem das Bauteil direkt aus einem formlosen (Flüssigkeit, Gel, Pulver oder Ähnliches) oder formneutralen Material (band- oder drahtförmige, sowie blattförmige Materialien) mittels chemischer und/oder physikalischer Prozesse hergestellt wird. Als vorteilhafte Verfahren haben sich insbesondere Fused Deposition Modeling (FDM), Selektives Lasersintern sowie das Multi Jet Fusion-Verfahren der Firma Hewlett Packard herausgestellt. Als vorteilhafte Materialien eignen sich insbesondere Acrylnitril-Butadien-Styrol-Copolymere (ABS) und Polyamide wie z. B. PA12.

Die Verwendung des generativen Herstellungsverfahrens für das wenigstens eine Bauteil des Fluidkanals, erlaubt zum einen eine kostengünstige Herstellung verglichen mit dem nachträglichen Bearbeiten einer Metallplatte und gewährt zum anderen die Möglichkeit, bestimmte funktionelle Eigenschaften, wie beispielsweise das durch das Bauteil in das Fluid induzierte Strömungsverhalten, zielgenau zu beeinflussen und somit die Kühlleistung des Fluidkanals zu verbessern.

Erfindungsgemäß ist vorgesehen, dass die Austrittsöffnung als eine oder mehrere Düsen ausgebildet sind. Entsprechend einer nicht beanspruchten Ausführungsform kann die Austrittsöffnung als ein im Wesentlichen ununterbrochener Austrittskanal ausgebildet sein. Dabei ist der im Wesentlichen ununterbrochene Austrittskanal als ein solcher Kanal zu verstehen, bei dem das Verhältnis der für das Fluid durchlässigen Bereiche zu den für das Fluid nicht durchlässigen Bereichen wenigstens 5:1, bevorzugt 20:1, besonders bevorzugt größer als 100:1 ist. Die Unterbrechungen können beispielsweise Elemente zur Stabilisierung des Bauteils sein, oder auch Lamellen oder ähnliche Bauteile, die eine Änderung der Strömungsrichtung des Fluids durch die Austrittsöffnung bewirken können.

In einer bevorzugten Weiterbildung dieser Ausführungsform sind die von zwei verschiedenen Düsen vorgegebenen Austrittsrichtungen für das Fluid verschieden. In einer nicht beanspruchten Ausführungsform variiert die Austrittsrichtung entlang des Austrittskanals. So kann über die gesamte Strecke des Fluidkanals eine gezielte Ausbringung des Fluids geleistet, und so die Kühlung des Bodens der Behälter optimiert werden. Verglichen mit den üblichen Fluidkanälen, bei denen die Austrittsöffnungen im Wesentlichen aus einem dünnen Metallblech gestanzt sind, hat diese Ausführungsform den Vorteil, dass die Austrittsrichtung des Fluids beeinflussende Eigenschaften des Fluidkanals bereits bei der Herstellung und ohne Verwendung zusätzlicher Elemente, wie beispielsweise Ventilatoren, in das Bauteil eingeprägt werden können.

Es kann jedoch auch vorgesehen sein, dass die Austrittsrichtungen aller Austrittsöffnungen gleich sind und insbesondere entgegen der Bewegungsrichtung der Flaschen in einer entsprechenden Transporteinrichtung, also entgegen der Prozessrichtung ausgerichtet sind. Das heißt nicht, dass die Austrittsrichtungen zwingend parallel und entgegengesetzt zur Prozessrichtung sein müssen, jedoch hat in dieser Ausführungsform eine Komponente eines Richtungsvektors, der die Austrittsrichtung repräsentiert, eine von null verschiedene Komponente in eine der Prozessrichtung entgegengesetzte Richtung und eine von null verschiedene Komponente in Richtung des Bodens einer zu kühlenden Flasche bzw. in Richtung der Transportvorrichtung der Behälter.

In einer Ausführungsform kann das Bauteil eine Krümmung aufweisen. Ein Fluidkanal, der ein solches Bauteil umfasst, kann so besser an die Form einer Transporteinrichtung, bzw. dem von den Behältern in der Transporteinrichtung zurückgelegten Weg, angepasst werden, ohne dass der Fluidkanal unterbrochen werden müsste. Der Fluidkanal kann also mit lediglich einer Einspeisung und einer optionalen Abführung für das Fluid über die gesamte Länge der Transporteinrichtung, bzw. über die gesamte angestrebte Kühlungsstrecke, ausgebildet werden. Somit können Unterbrechungen in dem Fluidkanal vermieden werden.

Es kann weiterhin vorgesehen sein, dass das Bauteil wenigstens ein Befestigungselement zum Verbinden mit einem anderen Bauteil des Fluidkanals und/oder zum Befestigen des Bauteils an einem Teil der Behälterbehandlungsanlage umfasst. Das Anschweißen oder anderweitiges Anbringen solcher Elemente, wie durch Nieten oder Stanzen, oder das nachträgliche Verbinden mit Schrauben kann unterbleiben und die notwendigen Elemente zum Verbinden und Befestigen können direkt bei der Herstellung des Bauteils in das Bauteil integriert werden, was die Kosten für die Herstellung reduzieren, und die Lebensdauer des Bauteils verbessern kann.

In einer Ausführungsform ist die äußere Geometrie des Bauteils derart ausgebildet, dass Partikel, die sich auf der äußeren Oberfläche des Bauteils befinden, sich unter dem Einfluss der Gravitation von dem Boden des Behälters weg bewegen. Dazu ist analog ein Wegbewegen der Partikel in eine Richtung weg von der Transportstrecke der Behälter zu verstehen. Hierunter sind insbesondere Ausführungsformen zu verstehen, bei denen das Bauteil im eingebauten Zustand einen Querschnitt mit einer konkaven Oberfläche umfasst, die die Austrittsöffnung einschließt. Darunter fallen insbesondere dreieckige Querschnitte bzw. äußere Formen für das Bauteil.

Optional kann das Bauteil nach der eigentlichen Herstellung noch chemisch und/oder mechanisch behandelt werden, um die Oberflächen zu glätten und somit das Wegbewegen von Partikeln und Flüssigkeiten zu unterstützen.

Hierzu kommen mehrere Verfahren infrage, die entweder einzeln oder in beliebiger Kombination verwendet werden können. Beim Fused Deposition Modeling als Herstellungsverfahren für die Bauteile. Wird hier als Material für die Bauteile ABS (Acrylnitril-Butadien-Styrol-Copolymere) verwendet, kann eine Nachbehandlung mit einer Lösung auf Azetonbasis erfolgen, um die Oberfläche zu glätten und so das Haften von Schmutzpartikeln zu erschweren. Das hat jedoch den Nachteil, dass das Material spröder wird. Ferner kann hier auch eine Versiegelung der Bauteile mit einem Hartz erfolgen, was nicht nur eine gewisse Abdichtung der Bauteile im Allgemeinen bewirkt, sondern insbesondere bei Bauteilen auf ABS-Basis auch eine Glättung der Oberfläche mit sich bringt.

Wird als Herstellungsverfahren SLS-Druck verwendet (selektive Lasersinter-Verfahren), kann eine Nachbehandlung der Oberfläche der Bauteile durch Lackieren erfolgen. Ferner kann die Oberfläche mit Strahlen (Sandstrahlen oder ähnliches) behandelt werden, um eine Glättung der Oberfläche und bessere haptische Eigenschaften zu erzielen. Um mögliche Ablagerungen von Pulver aus dem Sinterverfahren an der Oberfläche zu vermeiden, kann auch hier eine Beschichtung oder Behandlung mit einem Hartz erfolgen. Ebenso kommt eine Beschichtung mit PTFE (Polytetrafluorethylen) infrage.

Weiterhin kann vorgesehen sein, dass das Bauteil eine Dichtung umfasst, die mit dem generativen Herstellungsverfahren hergestellt wurde, und ein integraler Bestandteil des Bauteils ist. Bei der Dichtung muss es sich nicht um eine, aus demselben Material wie das Bauteil bestehende Dichtung handeln. Beispielsweise kann die Dichtung aus einer NBR-Platte herausgeschnitten sein. Die Herstellung des Bauteils insgesamt kann so vereinfacht werden, da auch eine Dichtung bereits während der Herstellung des Bauteils integriert werden kann, und somit nachfolgende Schritte bei der Herstellung des Bauteils eingespart werden können.

In einer Ausführungsform wird der Fluidkanal im Wesentlichen durch mehrere Bauteile gebildet. In einer nicht beanspruchten Ausführungsform ist die Austrittsöffnung als im Wesentlichen durchgängiger Austrittskanal gebildet, wobei sich der Austrittskanal über wenigstens 50 %, bevorzugt 75 %, bevorzugt 90 %, oder mehr der Länge des Fluidkanal erstreckt. Die gesamten Kosten zur Herstellung des Fluidkanals können so reduziert werden, und gleichzeitig eine Kühlung der Böden der Behälter praktisch über die gesamte Länge des Fluidkanals gewährleistet werden.

Beispielhaft erstreckt sich der Austrittskanal ununterbrochen über wenigstens zwei angrenzende Bauteile hinweg. Störungen beim Austreten des Fluids durch den Übergang von einem ersten Bauteils in ein zweites Bauteil können so vermieden werden, wobei die Herstellungskosten hierfür aufgrund der Verwendung des generativen Verfahrens für die Bauteile relativ gering bleiben können, verglichen mit der Bearbeitung eines flachen Metallblechs, oder mehrerer angrenzender Metallbleche.

Ferner kann vorgesehen sein, dass das Fluid durch einen Strömungskanal innerhalb des Bauteils strömt, und von dort zu der Austrittsöffnung gelangen kann, wobei der Querschnitt des Strömungskanals senkrecht zur Strömungsrichtung des Fluids variiert. Da die Menge des durch den Strömungskanal strömenden Fluids mit wachsender Entfernung von der Einspeiseeinrichtung des Fluids in den Fluidkanal sinkt (Fluid wird durch die Austrittsöffnungen aus dem Strömungskanal abgeführt), kann durch Variation des Querschnitts des Strömungskanals eine im Wesentlichen gleichbleibende, oder auch bereichsweise höhere Ausströmgeschwindigkeit des Fluids erreicht werden. Besonders vorteilhaft ist es, die Ausströmgeschwindigkeit in den verschiedenen Bereichen des Strömungskanals so zu wählen, dass die größte Kühlleistung pro Zeiteinheit am (in Transportrichtung der zu kühlenden Behälter gesehen) Anfang des Strömungskanals erbracht wird.

Ferner kann der innere Querschnitt des Bauteils vom äußeren Querschnitt verschieden sein. Während die Strömungseigenschaften des Fluids im Wesentlichen durch den inneren Querschnitt des Bauteils bestimmt werden, bestimmen sich die Eigenschaften bezüglich der Abweisung von Schmutz oder ähnlichen Partikeln im Wesentlichen durch den äußeren Querschnitt des Bauteils. Durch die Verwendung generativer Herstellungsverfahren können beide Eigenschaften vorteilhaft optimiert werden.

Das erfindungsgemäße Verfahren zum Herstellen eines Bauteils eines Fluidkanals gemäß einer der obigen Ausführungsformen umfasst insbesondere 3-D-Druck, wie hier im besonderen Multi-Jet-Fusion-Verfahren, wie sie beispielsweise von der Firma HP (Hewlett Packard) bekannt sind. Diese Verfahren sind kostengünstig und flexibel umsetzbar und erlauben die effektive Herstellung entsprechender Bauteile.

In einer Weiterbildung des Verfahrens werden wenigstens zwei Bauteile des Fluidkanals mit dem generativen Verfahren hergestellt und/oder in einem Prozessschritt des generativen Verfahrens hergestellt. Dabei bedeutet, dass die Herstellung der zwei Bauteile in einem einzigen Prozessschritt, dass die Vorrichtung, die die Bauteile herstellt, diese im Wesentlichen zeitgleich oder zumindest ohne Unterbrechung des Herstellungsprozesses, beispielsweise durch Herausnahme des ersten bereits fertiggestellten Bauteils, herstellt. Vorteilhaft werden die wenigstens zwei Bauteile innerhalb eines definierten Bauraumes des 3D-Druckers ineinander geschachtelt, so dass ein Großteil der benötigten Bauteile eines Fluidkanals in einem Prozessschritt hergestellt werden kann. Möchte man mehrere baugleiche Fluidkanäle aus jeweils wenigstens zwei Bauteilen herstellen so ist es auch denkbar, dass die identischen Bauteile in einem ersten Schritt und weitere identische Bauteile in einem weiteren Schritt hergestellt werden. Die benötigte Zeit für die Herstellung dieser beiden Bauteile kann so reduziert werden. Folglich können somit auch Kosten eingespart werden.

In einer Weiterbildung dieser Ausführungsform werden sämtliche Bauteile des Fluidkanals in einem Prozessschritt des generativen Verfahrens hergestellt. Bezüglich der Bedeutung der Herstellung in einem Prozessschritt gilt das bereits oben gesagte. Der Vorteil der Reduzierung der Herstellungskosten tritt bei dieser Ausführungsform noch mehr zutage.

Die erfindungsgemäße Behälterbehandlungsanlage zum Behandeln von Behältern, wie Flaschen, umfasst eine Blasformmaschine und eine der Blasformmaschine in Prozessrichtung nachgeordnete Behälterbehandlungsmaschine, sowie einen Fluidkanal zwischen der Blasformmaschine und der nachgeordneten Behälterbehandlungsmaschine, wobei der Fluidkanal ein Fluidkanal nach einer der obigen Ausführungsformen ist. Die Behälterbehandlungsanlage kann durch die Verwendung des erfindungsgemäßen Fluidkanals zu reduzierten Kosten hergestellt werden, wobei die Qualität der hergestellten Behälter gleich bleibt, verglichen mit dem Stand der Technik oder demgegenüber sogar noch verbessert werden kann.

### Kurze Beschreibung der Figuren

- Figur 1: schematische Ansicht eines Fluidkanals gemäß einer Ausführungsform
- Figuren 2a-f: schematische Darstellung verschiedener Ausführungsformen und Beispiele des Bauteils
- Figur 3a+b: schematische Darstellung von zwei miteinander verbindbaren Bauteilen gemäß einer Ausführungsform
- Figur 4: schematische Darstellung einer Behälterbehandlungsanlage gemäß einer Ausführungsform

### Ausführliche Beschreibung

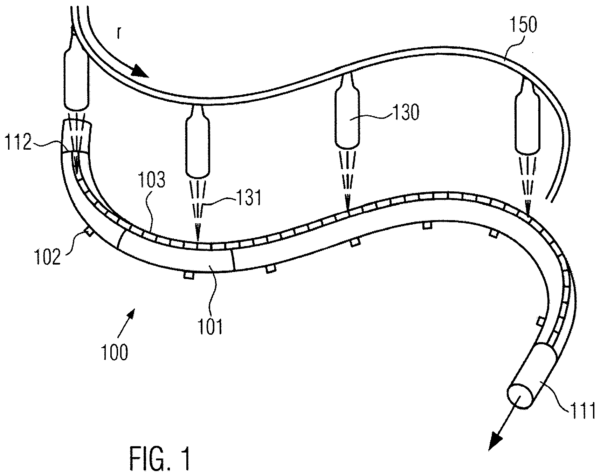

Figur 1 zeigt einen erfindungsgemäßen Fluidkanal 100 in Relation zu einer Transporteinrichtung 150 für Behälter 130, die entlang der dargestellten Pfeilrichtung transportiert werden, gemäß einer Ausführungsform. Der dargestellte Fluidkanal umfasst einen nicht weiter detaillierten Einlass 112 für ein Fluid, insbesondere ein Gas wie Luft oder Ähnliches. Der Fluidkanal erstreckt sich dann durchgängig bis zu einem optionalen Auslass 111, aus dem zumindest ein Teil des über den Einlass 112 zugeführten Fluids wieder entweichen kann. Während der Strecke zwischen Einlass und Auslass ist der Fluidkanal 100 im Wesentlichen als ein hohles Rohr ausgebildet, das wenigstens eine Austrittsöffnung 103 aufweist, durch die das Fluid ausströmen kann. Dabei ist die Austrittsöffnung so angeordnet, dass das Fluid (mit Bezugszeichen 131 dargestellt) in Richtung des Bodens eines Behälters 130, der in der Transporteinrichtung 150 bewegt wird, ausströmen kann, um diesen zu kühlen.

Bei der Transporteinrichtung 150 kann es sich insbesondere um mindestens einen Transferstern handeln, der die Behälter 130 im Halsbereich (Neckhandling) oder an anderer Stelle fixiert. Der Fluidkanal kann in seiner Form dann dem Transferstern entsprechen, bzw. der Bewegungsrichtung der Behälter im Transferstern folgen.

Am Boden des Fluidkanals bzw. der, der Austrittsöffnung gegenüberliegenden Seite können eine oder mehrere Reinigungsöffnungen (nicht dargestellt) vorgesehen sein, um ein Ablaufen von kondensiertem Wasser und/oder Reinigungsmitteln zu gewährleisten. Diese sind im Vergleich zu der mindestens einen Austrittsöffnung für das Fluid so gestaltet, dass nur ein sehr geringer Prozentsatz des Kühlfluids während des Betriebs des Fluidkanals überhaupt durch diese austritt. Die Reinigungsöffnungen können auch verschließbar ausgebildet sein, beispielsweise über mechanische Schieber.

Während der Fluidkanal zwischen dem Einlass und dem Auslass im Wesentlichen als Rohr beschrieben werden kann, so ist dies nicht als beschränkend mit Hinblick auf die äußere Form und die innere Form des Fluidkanals zu verstehen. Wie im Folgenden beschrieben wird, kann die äußere Form im Prinzip beliebig sein und auch die innere Form, insbesondere der innere Querschnitt des Fluidkanals kann, sofern zumindest eine Strömung des Fluids vom Einlass 112 zum Auslass und währenddessen durch die Austrittsöffnung 103 in Richtung des Bodens eines Behälters 130 möglich ist, beliebig sein. Beispielsweise kann der innere Querschnitt senkrecht zur Strömungsrichtung des Fluids rund oder eckig ausgebildet sein. Er kann auch entlang der Strecke des Fluidkanals 100 vom Einlass zum Auslass variieren. Der Bodenbereich (bzw. ein der Austrittsöffnung gegenüberliegender Bereich) des Querschnitts bzw. des Fluidkanals insgesamt kann dabei in Richtung der optionalen Reinigungsöffnung geneigt sein, um ein Ablaufen von Kondensat oder Reinigungsmittel zu gewährleisten.

Erfindungsgemäß umfasst der Fluidkanal 100 wenigstens ein Bauteil 101, das durch ein generatives Herstellungsverfahren hergestellt wurde. Bei dem generativen Herstellungsverfahren kann es sich im Prinzip um sämtliche generative Herstellungsverfahren handeln, wobei jedoch insbesondere der 3-D-Druck und das Multi-Jet-Fusion-Verfahren bevorzugt sind.

Während hier lediglich ein Bauteil 101 dargestellt ist, das mit einem solchen generativen Herstellungsverfahren hergestellt wurde, kann der Fluidkanal 100 auch mehrere solcher Bauteile 101 umfassen, oder gar vollständig aus mittels generativer Herstellungsverfahren hergestellten Bauteilen bestehen. Diese können lösbar oder unlösbar miteinander verbunden sein. Je nach Länge des Fluidkanals, kann der Fluidkanal durch lediglich ein einziges, mittels eines generativen Herstellungsverfahrens hergestellten Bauteils gebildet werden.

Dabei kann grundsätzlich vorgesehen sein, dass, sofern die Länge des Fluidkanals nicht 1 m überschreitet, der Fluidkanal durch ein einziges Bauteil 101, das mittels eines generativen Herstellungsverfahrens hergestellt wird, gebildet wird. Ist die Länge erheblich größer als 1 m, beispielsweise 2 m oder 3 m, so kann der Fluidkanal aus wenigstens zwei, bevorzugt bis zu 10 oder bis zu 20 entsprechend hergestellten Bauteilen zusammengesetzt sein oder zumindest entsprechende Bauteile umfassen.

Wie bereits in der Figur 1 angedeutet, ist der Fluidkanal nicht zwingend gerade, sondern kann auch eine Krümmung aufweisen, die im Wesentlichen der Form der Transportstrecke für die Behälter 130 folgt. Demgemäß kann auch jedes der Bauteile 101 oder zumindest das eine Bauteil 101 eine Krümmung aufweisen. Dabei können die entsprechenden Krümmungsradien als Maß für die Krümmung des Bauteils zwischen 0,2m und mehreren Metern, auch mehrerer 10 m liegen. Auch kleinere oder noch größere Krümmungsradien sind aufgrund der Herstellung der Bauteile des Fluidkanals mittels generativen Verfahren ohne Schwierigkeiten möglich.

In der Figur 1 ist ebenfalls schematisch dargestellt, dass der Fluidkanal 100 als solcher mit Befestigungselementen 102 beispielsweise am Boden einer Werkshalle, einem Tisch oder innerhalb einer Maschine befestigt sein kann. Wenigstens ein solches Befestigungselement kann auch an dem Bauteil 101 vorgesehen sein. Es ist auch denkbar, dass das Befestigungselement geometrisch so gestaltet ist, dass zwei Bauteile 101 gleichzeitig (in einem Arbeitsgang) miteinander und am Boden, Tisch oder innerhalb einer Maschine befestigt werden können.

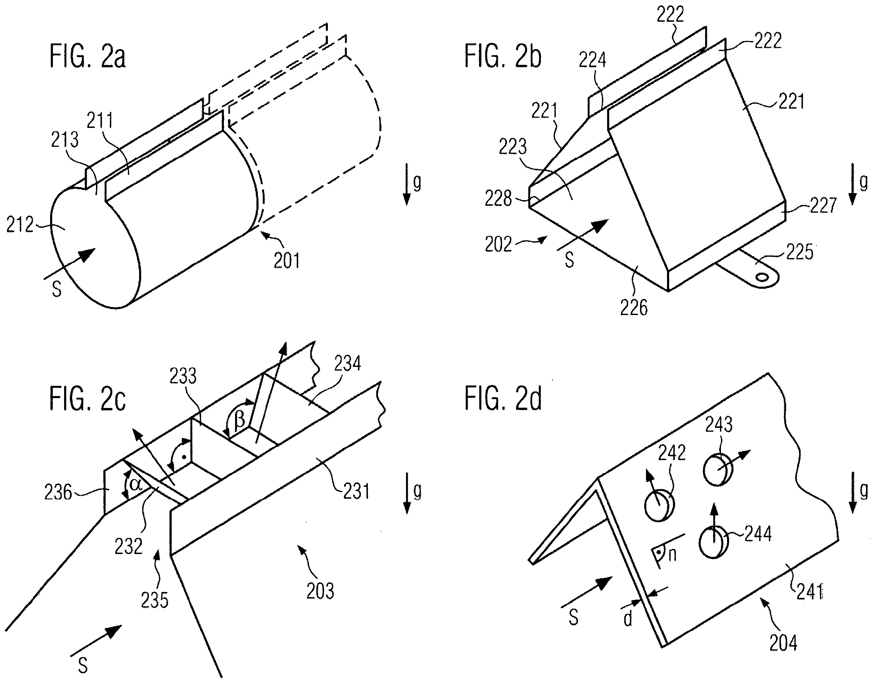

In den Figuren 2a bis 2f werden unterschiedliche Ausführungsformen und Beispiele des Bauteils 101, wie es beispielhaft in der Figur 1 dargestellt ist, beschrieben. Es versteht sich, dass diese Ausführungsformen und Beispiele bei entsprechender Wahl der Form des Fluidkanals der Figur 1 auch mit dieser Ausführungsform kombiniert werden können. In den folgenden Ausführungsformen ist jeweils die Erdbeschleunigung g mit einer entsprechenden Richtungsangabe (Pfeil) dargestellt, um die übliche Ausrichtung bei Betrieb des Fluidkanals zum Kühlen von Behältern, insbesondere deren Boden, und damit auch die Ausrichtung des Bauteils zu veranschaulichen.

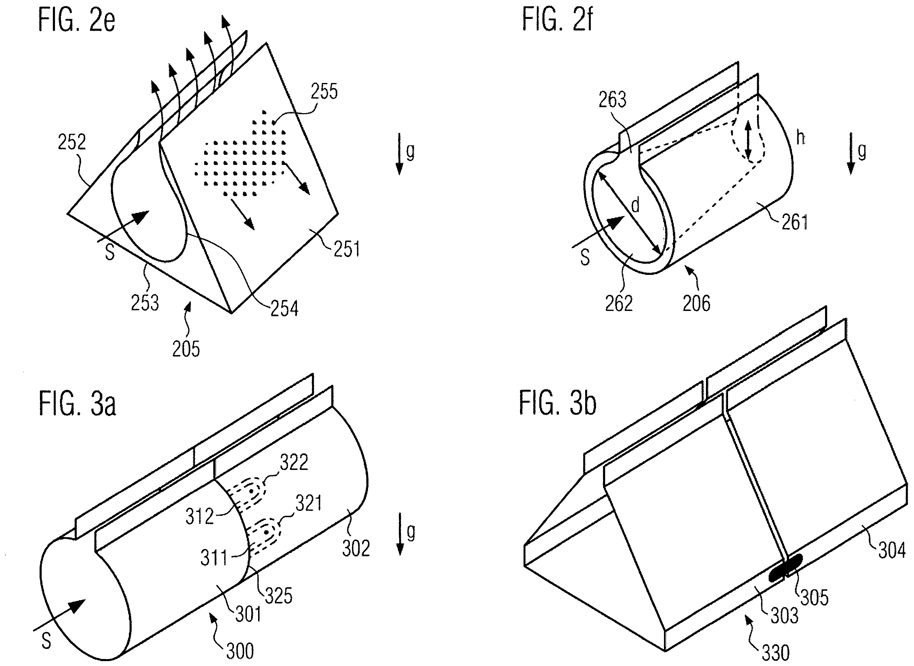

In Figur 2 a ist beispielhaft ein Bauteil 201 dargestellt, dessen Querschnitt senkrecht zur Strömungsrichtung s im Wesentlichen kreisrund ausgebildet ist. Dadurch wird ein Strömungskanal 212 gebildet, durch den das Fluid, wie beispielsweise Luft, strömen kann. Nach oben (also bei Aufbau des Fluidkanals in Richtung der Transporteinrichtung 150, wie sie in Figur 1 dargestellt ist) erstreckt sich die Austrittsöffnung 213, die in diesem Beispiel durch zwei Bleche 211, die im Wesentlichen parallel zueinander verlaufen, gebildet wird.

In Figur 2b ist ein beispielhaftes Bauteil 202 dargestellt, dessen Querschnitt senkrecht zur Strömungsrichtung s eines Fluids im Wesentlichen dreieckig oder trapezförmig ist. Analog zur Figur 2a wird die Austrittsöffnung 224 durch zwei Bleche 222 begrenzt. Der Begriff "Blech" bezieht sich hier lediglich auf die Form dieser Komponenten als länglich und bevorzugt dünn (nur wenige Millimeter oder sogar weniger als 2mm dick) und soll nicht als beschränkend für die dafür verwendeten Materialien angesehen werden. Von diesen ausgehend, erstreckt sich zu einer Grundfläche jeweils eine Begrenzungsfläche 221, die als ebene Fläche ausgebildet ist, sodass sich ein bis auf die Flächen 227 und 228 dreieckiges Querschnittsprofil 223 bildet. Dieses Beispiel bietet den Vorteil, dass Schmutz von den Begrenzungsflächen 221 lediglich unter dem Einfluss der Schwerkraft nach unten rutschen kann (also weg vom Boden des Behälters, der in dem dargestellten Bild über der Austrittsöffnung 224 wäre). So kann vermieden werden, dass beispielsweise Staub durch den Austritt des Fluids durch die Austrittsöffnung 224 aufgewirbelt wird und an der Außenseite der Behälter haften bleibt, oder schlimmstenfalls in die Behälter eindringt, wodurch der Innenraum der Behälter kontaminiert wird.

Ferner ist in dem Beispiel gemäß Figur 2b ein Befestigungselement 225 zum Befestigen des Bauteils 202 beispielsweise am Boden einer Werkshalle oder auf einem Tisch dargestellt. Ein solches Befestigungselement kann auch in dem Beispiel gemäß Figur 2a vorgesehen sein. Dieses kann als integraler Bestandteil des Bauteils 202 vorgesehen sein und zwar derart, dass es während des Herstellungsprozesses des Bauteils 202 mithilfe des generativen Herstellungsverfahrens zusammen mit dem Bauteil gebildet wird, und nicht erst danach mit dem Bauteil verbunden werden muss, sondern bereits während der Herstellung als fester Bestandteil des Bauteils gebildet wird.

In Figur 2c ist ein Beispiel einer Austrittsöffnung 235 in einem Bauteil 203 dargestellt, wie sie beispielsweise auch in den Austrittsöffnungen der Figuren 2a und 2b und damit auch in der Austrittsöffnung gemäß Figur 1 implementiert werden könnte.

In diesem Beispiel ist vorgesehen, dass zwischen den Begrenzungsflächen 231 und 236 Anstellbleche 232 bis 234 angeordnet sind, die mit der Strömungsrichtung s des Fluids durch den Strömungskanal des Bauteils 203 einen Winkel (α, β,...) einschließen, der von 90° verschieden sein kann. Auch hier ist der Begriff "Blech" lediglich als die Form charakterisierend und nicht als beschränkend für die verwendeten Materialien zu verstehen. Bei den Anstellblechen handelt es sich, wie aus der Fig. 2c zu erkennen, um Querverstrebungen, die zwischen den seitlichen Begrenzungen (Begrenzungsflächen) der Austrittsöffnung verlaufen. Dabei kann es sich bevorzugt um im Wesentlichen flache (nur wenige Millimeter dick) und ebene Querverstrebungen handeln. Auch Lamellen oder lamellenförmige Strukturen kommen in Betracht.

In dem dargestellten Beispiel schließt beispielsweise das Anstellblech 232 mit der Strömungsrichtung s einen Winkel α ein, das Anstellblech233 einen rechten Winkel, und das Anstellblech234 den Winkel β. Durch diese Winkel können die Austrittsrichtungen (je mit Pfeilen dargestellt) des Fluids über die Länge des Bauteils und letztlich auch über die Länge des gesamten Fluidkanals variiert werden.

In der Ausführungsform gemäß Figur 2d ist schematisch ein Bauteil 204 dargestellt, das beispielsweise einen ähnlichen Querschnitt wie in Figur 2b aufweisen kann. Während in allen übrigen Beispielen die Begrenzungsflächen der Bauteile zwingend aufgrund des generativen Herstellungsverfahrens eine gewisse Ausdehnung von bis zu einigen Millimetern erreichen, ist dies nur hier deutlicher dargestellt, um diese Ausführungsform besser zu beschreiben. In der Ausführungsform gemäß Figur 2d werden die Austrittsöffnungen durch mehrere Düsen bzw. Löcher 242, 243 und 244 gebildet, die als im Wesentlichen zylindrische Öffnungen in der Begrenzungsfläche 241 vorgesehen sind. Da das Bauteil mittels eines generativen Herstellungsverfahrens hergestellt wurde, ist es während der Fertigung des Bauteils nicht notwendig, die Düsen 242 bis 244 nach Herstellung des Bauteils beispielsweise durch einen destruktiven Prozess, wie Bohren, in das Bauteil einzubringen, sondern die Düsen 242 bis 244 können direkt bei Herstellung integral mit dem Bauteil gebildet werden, indem während des generativen Herstellungsverfahrens in den Bereichen der Düsen 242 bis 244 kein Material eingebracht wird.

Die Mittelachsen der Düsen müssen dabei nicht zwingend parallel zueinander sein, sondern können, wie in der Figur 2d bereits angedeutet, mit der Flächennormale n der Begrenzungsfläche 241 einen Winkel einschließen. Analog schließen diese Mittelachsen auch mit der Strömungsrichtung s des Fluids durch das Bauteil 204 einen Winkel ein. Die Düsen bzw. Austrittsöffnungen 242 bis 244 bieten den Vorteil, dass durch die Strömung des Fluids durch die endliche Dicke der Materialschicht der Begrenzungsfläche 241 das Fluid bzw. die Strömung des Fluids in die Richtung der Mittelachsen gezwungen wird, sodass auch die Richtung, unter der das Fluid auf den Boden des Behälters trifft, variiert werden kann.

Figur 2e zeigt ein Beispiel, bei der das Bauteil 205 zum einen äußere Begrenzungsflächen 251, 252 und 253, und zum anderen eine innere Begrenzungsfläche 254 umfasst. Der innere Querschnitt des Bauteils 205 ist senkrecht zur Strömungsrichtung s und unterscheidet sich in dieser Ausführungsform von dem äußeren Querschnitt des Bauteils senkrecht zur Strömungsrichtung s. Damit können unterschiedliche Anforderungen, insbesondere hinsichtlich der Strömungseigenschaften des Fluids entlang des Strömungskanals im Inneren des Bauteils 205 einerseits, und Eigenschaften der Oberfläche des Bauteils 205, insbesondere mit Bezug auf die Abweisung von Schmutz, andererseits erreicht werden. Wie hier dargestellt ist, gewährleistet beispielsweise die äußere Oberfläche 251, dass Schmutzpartikel 255 entlang der dargestellten Pfeilrichtung zumindest zum Teil in Richtung der Schwerkraft von dem Bauteil herunter gleiten.

Figur 2f zeigt ein weiteres Beispiel, bei dem das Bauteil 206 eine äußere Begrenzungsfläche 261 und eine innere Begrenzungsfläche 262 umfasst. Die äußere Begrenzungsfläche stellt einen Zylindermantel mit konstantem Durchmesser dar. Die innere Begrenzungsfläche des Bauteils ist jedoch als Kegelstumpf derart ausgebildet, dass der Durchmesser d größer ist, als der Durchmesser h, während die innere Begrenzungsfläche in jedem Fall in die Austrittsöffnung 263 mündet. Mit dieser Ausführungsform kann beispielsweise sichergestellt werden, dass die Ausströmgeschwindigkeit des Mediums über die gesamte Strecke des Fluidkanals konstant gehalten werden kann, da beispielsweise der innere Durchmesser über die Länge des Bauteils in Strömungsrichtung s um ein Maß vermindert werden kann, das abhängig von der ausgetretenen Menge an Fluid durch die Austrittsöffnung ist.

Sämtliche hier beschriebenen Ausführungsformen und Beispiele können grundsätzlich miteinander kombiniert werden. Beispielsweise kann ein Bauteil sowohl eine Austrittsöffnung in Form der Schlitze, wie sie in den Figuren 2a bis 2c, sowie 2e und 2f beschrieben wurden, und zusätzlich eine oder mehrere Düsen 242 bis 244, wie sie in Figur 2d dargestellt wurden, umfassen. Ferner können die Anstellbleche gemäß Figur 2c in jeder der übrigen Ausführungsformen 2a, 2b und 2e bis 2f integriert werden. Auch andere Ausführungsformen und Kombinationen der in der Figur 2 beschriebenen Ausführungsformen und Beispiele sind denkbar.

Die Figuren 3a und 3b zeigen zwei verschiedene Ausführungsformen zum Verbinden zweier generativ hergestellter Bauteile miteinander.

In Figur 3a sind zwei Bauteile 301 und 302 als Teil eines Fluidkanals 300 dargestellt. In dieser Ausführungsform umfassen die Bauteile 301 und 302 Klickverbindungen im Innenraum, durch den das Fluid entlang der Strömungsrichtung s strömt. Die Klickverbindungen können so ausgebildet sein, dass das eine Bauteil 301 Raster 311 und 312 aufweist, und das Bauteil 302 Kerben 321, 322 umfasst, in die die Raster einrasten können. Die jeweiligen Elemente 311 und 312, sowie 321, 322 werden bevorzugt bereits während des Herstellungsverfahrens der Bauteile als integraler Bestandteil der Bauteile gebildet.

Alternativ kann auch vorgesehen sein, dass die Bauteile 301 und 302 über ein durchgängiges, entlang der gesamten Verbindungslinie 325 vorgesehenes Verbindungselement, insbesondere eine Dichtung, die integraler Bestandteil wenigstens eines der Bauteile 301 und 302 ist, miteinander verbunden werden können. Unabhängig davon kann grundsätzlich vorgesehen sein, dass jedes der Bauteile während des generativen Herstellungsverfahrens mit einer Dichtung bzw. einem Dichtelement ausgestattet wird, das als integraler Bestandteil des Bauteils hergestellt wird. Dabei erlauben es einige generative Herstellungsverfahren, auch unterschiedliche Materialien miteinander zu verbinden, sodass je nach Wahl des Herstellungsverfahrens die Dichtungen ein von dem übrigen Material des Bauteils verschiedenes Material umfassen kann.

In Figur 3b wird eine Ausführungsform dargestellt, bei der die Bauteile 303, 304 eines Fluidkanals 330 über eine äußere Verbindung 305, beispielsweise eine Klammer oder Schelle, miteinander verbunden werden. Auch in dieser Ausführungsform kann jedes der Bauteile beispielsweise bereits eine integrierte Dichtung aufweisen.

Es sind auch andere Varianten der Verbindung der Bauteile untereinander denkbar, die hier nicht explizit dargestellt sind. So können die Bauteile auch mittels senkrecht zur Strömungsrichtung eingeführter Schrauben verbunden werden. Auch Verschraubungen parallel zur Strömungsrichtung durch Verwendung geeigneter Laschen im korrespondierenden Bauteil sind denkbar. Ferner können die Bauteile auch miteinander verklebt werden.

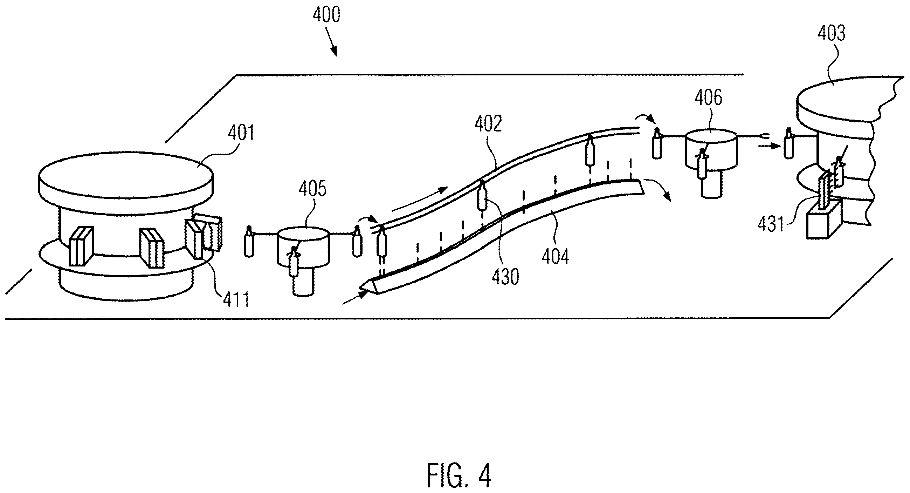

Figur 4 zeigt eine Behälterbehandlungsanlage 400 in einer Werkshalle gemäß einer Ausführungsform. In der hier dargestellten Ausführungsform umfasst die Behälterbehandlungsanlage eine Blasformmaschinen 401, die als Rundläufer ausgebildet ist, und an ihrem Umfang mehrere Blasformen 411 zum Ausformen von Behältern aus Vorformlingen umfasst. Diese Ausführungsform ist, wie auch die anderen Ausführungsformen von Maschinen in der Figur 4, nicht zwingend. So kann es sich bei der Blasformmaschine auch um eine linear arbeitende Maschine oder andere Ausführungsform handeln.

In Transportrichtung der Behälter 430 schließt sich an die Blasformmaschine ein Drehstern 405 (nicht zwingend) an, der die Behälter 430 aus der Blasformmaschine übernehmen und einer weiteren Transporteinrichtungen 402 zuführen kann. Die Transporteinrichtung 402 ist in der Figur 4 beispielsweise als Lufttransporteur oder als Neckhandling-Vorrichtung ausgebildet, die die Behälter jeweils an ihrem oberen Ende (im Kopfbereich) halten und entlang der dargestellten Pfeilrichtung transportieren kann. Es kann sich bei der Vorrichtung aber auch um voneinander unabhängig sich bewegende Läufer (Mover) handeln, die mittels eines Langstator-Linearmotors angetrieben werden.

Direkt unterhalb der Transporteinrichtung 402 ist ein Fluidkanal 404 gemäß einer der in den Figuren 1 bis 3b beschriebenen Ausführungsformen angeordnet, der das Medium in Richtung der Behälter ausgibt. Daran schließt sich ein weiterer Drehstern 406 (ebenfalls nicht zwingend) an, der die Behälter zum einen aus der Transporteinrichtung 402 übernimmt, und zum anderen an eine der Blasformmaschinen 401 in Prozessrichtung (also in Transportrichtung der Behälter) nachgeordnete Behälterbehandlungsmaschine 403 übergibt.

In der hier dargestellten Ausführungsform ist die Behälterbehandlungsmaschine eine Druckmaschine, der eine Druckstation 431 zugeordnet ist, die die Behälter mit einem Druckmotiv ausstatten kann. Auch die Druckmaschine 403 ist in dieser Ausführungsform als Rundläufer ausgebildet, was, wie beschrieben, nicht zwingend ist.

Während die in Fig. 4 beschriebene Ausführungsform besonders auf das Vorsehen zweier, in Prozessrichtung nacheinander angeordneter Behälterbehandlungsmaschinen und einen dazwischen angeordneten Fluidkanal abstellt, ist dies nicht beschränkend zu verstehen.

So kann eine Behälterbehandlungsanlage gemäß der Erfindung auch eine Vielzahl von in Prozessrichtung nacheinander angeordneter Behälterbehandlungsmaschinen umfassen, insbesondere 3 oder mehr. Zwischen jeweils benachbarten Behälterbehandlungsmaschinen einer solchen Anlage kann (muss aber nicht) ein Fluidkanal gemäß einer der obigen Ausführungsformen zum Kühlen des Bodens der Behälter in einer Transporteinrichtung vorgesehen sein. Dabei müssen die Fluidkanäle nicht identisch ausgeführt sein. Dies gilt sowohl für deren Form (Querschnitt und Austrittsöffnungen), als auch für ein beispielsweise von den einzelnen Fluidkanälen verwendetes Medium. So können ein oder mehrere Fluidkanäle ein gasförmiges Medium zur Kühlung der Behälterböden verwenden, wohingegen ein oder mehrere andere Fluidkanäle eine Flüssigkeit verwenden. Auch können verschiedene Gase und/oder Flüssigkeiten zum Einsatz kommen.

Als ein spezielles Beispiel kommt eine Behälterbehandlungsanlage infrage, die eine Blasformmaschine und eine dieser nachgeordnete Etikettiermaschine und einen dieser nachgeordneten Füller umfasst. Zwischen Blasformmaschine und Etikettiermaschine kann ein erster Fluidkanal vorgesehen sein und zwischen Etikettiermaschine und Füller ein zweiter Fluidkanal. Dabei kann insbesondere der erste Fluidkanal den Boden der Behälter mit einem Gas kühlen und der zweite Fluidkanal als Medium eine Flüssigkeit, wie Wasser verwenden. Jeder der Fluidkanäle kann erfindungsgemäß mit einem generativen Verfahren hergestellt worden sein.

## Patentansprüche

1. Fluidkanal (100) einer Behälterbehandlungsanlage (400) zum Behandeln von Behältern, wie Flaschen, die Behälterbehandlungsanlage umfassend eine Blasformmaschine (401) und eine der Blasformmaschine in Prozessrichtung nachgeordnete Behälterbehandlungsmaschine (403),
wobei der Fluidkanal (100) dazu angepasst ist in Prozessrichtung nach der Blasformmaschine und vor der nachgeordneten Behälterbehandlungsmaschine angeordnet zu sein und
zumindest ein Bauteil (101) umfasst, durch das das Fluid strömen kann und das wenigstens eine Austrittsöffnung (103) umfasst, durch die das Fluid in Richtung eines Bodens eines in Prozessrichtung transportierten Behälters (130) aus dem Fluidkanal austreten kann,
wobei die Austrittsöffnung (103) als eine oder mehrere Düsen (242, 243, 244) ausgebildet ist,
**dadurch gekennzeichnet, dass**
das Bauteil (102) ein mit einem generativen Herstellungsverfahren hergestelltes Bauteil ist,
wobei das generative Herstellungsverfahren ein Verfahren ist, bei dem das Bauteil direkt aus einem formlosen oder formneutralen Material mittels chemischer und/oder physikalischer Prozesse hergestellt wird.

2. Fluidkanal (100) nach Anspruch 1, wobei von zwei verschiedenen Düsen (242, 243, 244) vorgegebene Austrittsrichtungen für das Fluid verschieden.

3. Fluidkanal (100) nach einem der Ansprüche 1 bis 2, wobei das Bauteil (101) eine Krümmung aufweist.

4. Fluidkanal (100) nach einem der Ansprüche 1 bis 3, wobei das Bauteil (101) wenigstens ein Befestigungselement (225) zum Verbinden mit einem anderen Bauteil des Fluidkanals und/oder zum Befestigen des Bauteils an einem Teil der Behälterbehandlungsanlage umfasst.

5. Fluidkanal (100) nach einem der Ansprüche 1 bis 4, wobei die äußere Geometrie des Bauteils derart ausgebildet ist, dass Partikel, die sich auf der äußeren Oberfläche des Bauteils befinden, sich unter dem Einfluss der Gravitation von dem Boden des Behälters weg bewegen.

6. Fluidkanal (100) nach einem der Ansprüche 1 bis 5, wobei das Bauteil eine Dichtung umfasst, die mit dem generativen Herstellungsverfahren hergestellt wurde und ein integraler Bestandteil des Bauteils ist.

7. Fluidkanal (100) nach einem der Ansprüche 1 bis 6, wobei das Fluid durch einen Strömungskanal innerhalb des Bauteils strömen und von dort zu der Austrittsöffnung gelangen kann und wobei der Querschnitt des Strömungskanals senkrecht zur Strömungsrichtung des Fluids variiert.

8. Fluidkanal (100) nach einem der Ansprüche 1 bis 7, wobei der innere Querschnitt des Bauteils vom äußeren Querschnitt verschieden ist.

9. Verfahren zum Herstellen eines Bauteils eines Fluidkanals gemäß einem der Ansprüche 1 bis 8, wobei das generative Verfahren 3D-Druck, insbesondere ein Multi-Jet-Fusion Verfahren ist.

10. Verfahren nach Anspruch 9, wobei wenigstens zwei Bauteile des Fluidkanals (100) mit dem generativen Verfahren hergestellt werden und die zwei Bauteile in einem Prozessschritt des generativen Verfahrens hergestellt werden.

11. Verfahren nach Anspruch 10, wobei alle Bauteile des Fluidkanals (100) in einem Prozessschritt des generativen Verfahrens hergestellt werden.

12. Behälterbehandlungsanlage (400) zum Behandeln von Behältern, wie Flaschen (430), umfassend eine Blasformmaschine (401) und eine der Blasformmaschine in Prozessrichtung nachgeordnete Behälterbehandlungsmaschine (403) sowie einen Fluidkanal (404) zwischen der Blasformmaschine (401) und der nachgeordneten Behälterbehandlungsmaschine (403), wobei der Fluidkanal (404) ein Fluidkanal (100) nach einem der Ansprüche 1 bis 8 ist.

## Claims

1. Fluid channel (100) of a container processing system (400) for processing containers, such as bottles, the container processing system comprising a blow molding machine (401) and a container processing machine (403) arranged downstream of the blow molding machine in process direction, wherein the fluid channel (100) is adapted to being arranged downstream of the blow molding machine and upstream of the downstream container processing machine in the process direction and comprising at least one component (101), through which the fluid can flow and which comprises at least one outlet opening (103) through which the fluid can exit from the fluid channel in direction of a bottom of a container (130) transported in the process direction, wherein the outlet opening (103) is designed as one or more nozzles (242, 243, 244), **characterized in that** the component (102) is a component manufactured by a generative manufacturing method, wherein the generative manufacturing method is a method in which the component is manufactured directly from a formless or neutrally formed material by means of chemical and/or physical processes.

2. Fluid channel (100) according to claim 1, wherein two different nozzles (242, 243, 244) have different predetermined outlet directions for the fluid.

3. Fluid channel (100) according to one of claims 1 to 2, wherein said component (101) has a curvature.

4. Fluid channel (100) according to one of claims 1 to 3, wherein the component (101) comprises at least one fastening element (225) for connecting to another component of the fluid channel and/or for fastening the component to a part of the container processing system.

5. Fluid channel (100) according to one of claims 1 to 4, wherein the outer geometry of the component is designed in such a way that particles located on the outer surface of the component move away from the bottom of the container under the influence of gravity.

6. Fluid channel (100) according to one of claims 1 to 5, wherein the component comprises a seal formed by the generative manufacturing method and being an integral part of the component.

7. Fluid channel (100) according to one of claims 1 to 6, wherein the fluid is capable of flowing through a flow channel within the component and from there to the outlet opening, and wherein the cross-section of the flow channel varies perpendicularly to the direction of flow of the fluid.

8. Fluid channel (100) according to one of claims 1 to 7, wherein the inner cross-section of the component is different from the outer cross-section.

9. Method for producing a component of a fluid channel according to one of claims 1 to 8, wherein the generative method is 3D printing, in particular a multi-jet fusion method.

10. Method according to claim 9, wherein at least two components of the fluid channel (100) are produced by the generative method and the two components are produced in a process step of the generative method.

11. Method according to claim 10, wherein all components of the fluid channel (100) are manufactured in a process step of the generative method.

12. Container processing system (400) for processing containers, such as bottles (430), comprising a blow molding machine (401) and a container processing machine (403) arranged downstream of the blow molding machine in process direction as well as a fluid channel (404) between the blow molding machine (401) and the downstream container processing machine (403), wherein the fluid channel (404) is a fluid channel (100) according to one of the claims 1 to 8.

## Revendications

1. Canal de fluide (100) d'une installation de traitement de contenants (400) pour le traitement de contenants, tels que des bouteilles, l'installation de traitement de contenants comprenant une machine de moulage par soufflage (401) et une machine de traitement de contenants (403) agencée en aval de la machine de moulage par soufflage dans la direction de processus,
dans lequel le canal de fluide (100) est adapté pour être agencé dans la direction de processus après la machine de moulage par soufflage et avant la machine de traitement de contenants agencée en aval, et
comprend au moins un composant (101) à travers lequel le fluide peut s'écouler et qui comprend au moins une ouverture de sortie (103) à travers laquelle le fluide peut sortir du canal de fluide en direction d'un fond d'un contenant (130) transporté dans la direction de processus,
dans lequel l'ouverture de sortie (103) est réalisée sous la forme d'une ou plusieurs buses (242, 243, 244),
**caractérisé en ce que**
le composant (102) est un composant fabriqué avec un procédé de fabrication génératif,
dans lequel le procédé de fabrication génératif est un procédé dans lequel le composant est fabriqué directement à partir d'un matériau amorphe ou neutre au moyen de processus chimiques et/ou physiques.

2. Canal de fluide (100) selon la revendication 1, dans lequel des directions de sortie prédéterminées pour le fluide diffèrent entre deux buses différentes (242, 243, 244).

3. Canal de fluide (100) selon l'une quelconque des revendications 1 à 2, dans lequel le composant (101) présente une courbure.

4. Canal de fluide (100) selon l'une quelconque des revendications 1 à 3, dans lequel le composant (101) comprend au moins un élément de fixation (225) pour une liaison à un autre composant du canal de fluide et/ou pour une fixation du composant à une partie de l'installation de traitement de contenants.

5. Canal de fluide (100) selon l'une quelconque des revendications 1 à 4, dans lequel la géométrie extérieure du composant est formée de telle sorte que des particules, qui sont situées sur la surface extérieure du composant, s'éloignent du fond du contenant sous l'influence de la gravité.

6. Canal de fluide (100) selon l'une quelconque des revendications 1 à 5, dans lequel le composant comprend un joint qui a été fabriqué par le procédé de fabrication génératif et fait partie intégrante du composant.

7. Canal de fluide (100) selon l'une quelconque des revendications 1 à 6, dans lequel le fluide peut s'écouler à travers un canal d'écoulement à l'intérieur du composant et passer de celui-ci à l'ouverture de sortie, et dans lequel la section transversale du canal d'écoulement varie perpendiculairement à la direction d'écoulement du fluide.

8. Canal de fluide (100) selon l'une quelconque des revendications 1 à 7, dans lequel la section transversale intérieure du composant est différente de la section transversale extérieure.

9. Procédé de fabrication d'un composant d'un canal de fluide selon l'une quelconque des revendications 1 à 8, dans lequel le procédé génératif est une impression 3D, en particulier un procédé de fusion à jets multiples.

10. Procédé selon la revendication 9, dans lequel au moins deux composants du canal de fluide (100) sont fabriqués par le procédé génératif et les deux composants sont fabriqués dans une étape de processus du procédé génératif.

11. Procédé selon la revendication 10, dans lequel tous les composants du canal de fluide (100) sont fabriqués dans une étape de processus du procédé génératif.

12. Installation de traitement de contenants (400) pour traiter des contenants, tels que des bouteilles (430), comprenant une machine de moulage par soufflage (401) et une machine de traitement de contenants (403) agencée en aval de la machine de moulage par soufflage dans la direction de processus, ainsi qu'un canal de fluide (404) entre la machine de moulage par soufflage (401) et la machine de traitement de contenants (403) agencée en aval, dans lequel le canal de fluide (404) est un canal de fluide (100) selon l'une quelconque des revendications 1 à 8.
